(19) **Europäisches Patentamt**

**European Patent Office**

**Office européen des brevets**

(11) **EP 1 354 027 B1**

(12) **EUROPEAN PATENT SPECIFICATION**

(45) Date of publication and mention
of the grant of the patent:
**12.07.2006 Bulletin 2006/28**

(51) Int Cl.:
*C12H 1/048* (2006.01)       *C12H 1/056* (2006.01)
*C01B 33/12* (2006.01)

(21) Application number: **02732125.6**

(22) Date of filing: **07.01.2002**

(86) International application number:
**PCT/GB2002/000045**

(87) International publication number:
**WO 2002/057403 (25.07.2002 Gazette 2002/30)**

(54) **STABILISING BEVERAGES**

STABILISIERUNG VON GETRÄNKEN

STABILISATION DE BOISSONS

(84) Designated Contracting States:
**AT BE CH CY DE DK ES FI FR GB GR IE IT LI LU
MC NL PT SE TR**

(30) Priority: **22.01.2001 GB 0101507**

(43) Date of publication of application:
**22.10.2003 Bulletin 2003/43**

(73) Proprietor: **INEOS Silicas Limited
Warrington, Cheshire, WA5 1AB (GB)**

(72) Inventors:
• **EARL, Graham James
Winsford,
Cheshire CW7 1SE (GB)**

• **MCKEOWN, Ian Patrick
Merseyside,
Liverpool L19 3QZ (GB)**

(74) Representative: **Collingwood, Anthony Robert et
al
Lloyd Wise, McNeight & Lawrence
c/o Commonwealth House
1-19 New Oxford Street
London WC1A 1LW (GB)**

(56) References cited:
**EP-A- 0 183 162          EP-A- 0 325 188
DE-A- 1 907 610          DE-A- 3 302 258
US-A- 3 554 759          US-A- 3 676 367**

**Description**

This invention relates to stabilising beverages against haze formation and, in particular, using treated silicas for stabilising fermented and other beverages.

Beverages, particularly alcoholic fermented beverages, for example beers, have a tendency to produce haze which can be of biological or physico-chemical origin, and a number of products and processes are used for the removal of haze-forming constituents. Whilst gross haze effects are resolved by filtration, flocculation, or centrifugation, secondary haze develops during storage due to interactions between certain polypeptides and polyphenols which coagulate and precipitate. This haze therefore becomes apparent only at a stage when the beverage is being prepared for consumption and when removal is impractical. A number of organic and inorganic substances can be used to remove such haze precursors as polyphenols or polypeptides prior to packaging and so stabilise the beverage. US-A-3 554 759 and DE-A-1 907 610 disclose methods for improving the stability of beer.

One well-know substance is a water-insoluble, cross-linked polyvinyl pyrrolidone (often called polyvinyl polypyrrolidone or PVPP) which removes polyphenols and hence stabilises the beverage against haze formation. However, commercially available cross-linked polyvinyl pyrrolidones usually contain water-soluble, non-cross-linked material, which can remain in the beverage after treatment. In addition, these materials are relatively expensive. Furthermore, in a situation where it is desirable to use a combination of silica and PVPP in a single treatment step, it is necessary to use a silica xerogel because the PVPP is physically incompatible with silica hydrogel.

Surprisingly, it has now been found that a composition produced from silica and a polymer containing pyrrolidone groups can be used to treat beverages and overcome some of the above disadvantages of cross-linked polyvinyl pyrrolidone.

Consequently, according to the invention, a process for stabilising a beverage against haze formation comprises treating the beverage with a stabilising agent comprising a particulate silica having a mean pore diameter of at least 6 nm and which has been modified by interaction with a water-soluble polymer having pendant pyrrolidone groups, the polymer being present on the silica in an amount from 5 to 35 per cent by weight with respect to anhydrous weight of silica.

Surprisingly, it has been found that, despite being water-soluble, the polymer remains substantially bound to the silica during the treatment of the beverage. In addition, the stabilising agent used in the invention is cheaper to produce than the conventional cross-linked polyvinyl pyrrolidone, since substantially less pyrrolidone-containing polymer is required to provide sufficient accessible adsorption sites to effectively adsorb polyphenols from beverages. Furthermore, the stabilising agent used in the invention can be used as supplied without the need to pre-swell before use.

The process of the invention can be used to stabilise any beverage which is prone to haze formation through interaction of polyphenols with other beverage components such as polypeptides. Such beverages include ales, lagers, fruit juices, wines and ciders. The process is particularly useful for stabilising lager beers.

The silica which is used to prepare the stabilising agent used in the process of the invention is characterised by a mean pore diameter of at least 6 nm. The mean pore diameter (MPD) is calculated assuming a cylindrical model for the pores and using the equation:

$$\text{MPD (in nm)} = 4,000 \times \text{PV/SA}$$

where PV = Pore Volume to nitrogen (in $cm^3 \, g^{-1}$) and SA = Surface Area to nitrogen (in $m^2 \, g^{-1}$), each measured by the method described below. Preferably, the mean pore diameter is at least 8 nm and, usually, the mean pore diameter is not greater than 80 nm. Often, the mean pore diameter is not more than 50 nm.

Generally, the silica will have a surface area to nitrogen in the range 200 to 1000 $m^2g^{-1}$ and preferably in the range 250 to 800 $m^2g^{-1}$. The pore volume to nitrogen is usually in the range 0.5 to 2.5 $cm^3g^{-1}$ and preferably in the range 0.8 to 2.0 $cm^3g^{-1}$. These two parameters need to be selected in combination to ensure the appropriate mean pore diameter, as outlined hereinbefore.

The weight mean particle size of the silica is preferably in the range 2 to 100 micrometers, as determined by Malvern Mastersizer, as described in more detail hereinafter. More preferably, the silica has a weight mean particle size in the range 5 to 50 micrometers.

Usually, the total moisture content of the silica is in the range 2 to 70 per cent by weight and, preferably, in the range 5 to 65 per cent by weight.

The silica suitable for use in the process of the invention can be prepared by any conventional method. Commonly, silica is prepared from an alkali metal silicate by addition of a mineral acid. Silicas prepared by the so-called gel route or the so-called precipitate route are suitable for use in the process of the invention provided they possess the characterising parameters given hereinbefore.

The water-soluble polymer which is used to modify the silica in preparing the stabilising agent used in the process of the invention has pendant pyrrolidone groups. Typically, it is a polymer or copolymer of vinyl pyrrolidone and the homopolymer, polyvinyl pyrrolidone (often denoted as PVP), is particularly preferred. In connection with this invention, a polymer is considered to be water-soluble if the polymer dissolves completely in water at 20° C to produce a stable solution containing at least 1 weight per cent polymer. Preferred polymers form a stable aqueous solution containing at least 5 per cent by weight polymer at 20° C.

When polyvinyl pyrrolidone homopolymer is used, a suitable weight average molecular weight is in the range from about 8000 to about 1,300,000. Particularly useful polymers have been found to be PVP K15, K30 and K90, available, for example, from Sigma-Aldrich Company Ltd.

The amount of water-soluble polymer used in preparing the stabilising agent used in the invention is in the range 5 to 35 percent by weight with respect to anhydrous weight of silica. Preferably, the amount is in the range 10 to 30 per cent by weight based on anhydrous silica.

The stabilising agent can be prepared by any method which allows the water-soluble polymer to interact with the silica particles. In a typical process, the silica to be treated is dispersed at a concentration in the range 2 to 20 per cent by weight (with respect to weight of dispersion) in an aqueous solution of the water-soluble polymer, at a concentration in the range 1 to 20 per cent by weight of the solution (the concentration of polymer in the solution used will often be determined by the solubility of the polymer), and stirred for a period of from 10 minutes to about 24 hours. This time period must be sufficient to ensure effective interaction of the polymer and the silica but, generally, no deleterious effect is apparent if the stirring is continued beyond the minimum period necessary. The modified silica is then separated from the aqueous solution, typically by filtration, washed with water and subsequently dried, for example in an oven at a temperature in the range 40 to 110° C.

In an alternative process, a dry, or nearly dry, silica is blended with just sufficient aqueous solution of the water-soluble polymer to treat the silica at the desired loading of polymer and is then dried as above.

In the process of the invention the beverage is treated with the stabilising agent in order to remove haze-forming polyphenols from the beverage. The method of use is substantially similar to conventional treatment with cross-linked polyvinyl pyrrolidone. The stabilising agent used in the present invention is used in an amount similar to the amount of cross-linked polyvinyl pyrrolidone normally used, but the stabilising agent comprises only up to 35 per cent polymer by weight. Therefore, in the process of this invention, the efficiency of adsorption of polyphenols, relative to the amount of polymer used, is much higher than in conventional processes and, consequently, the cost of treatment using the new process is substantially less. Generally, the stabilising agent is added to the beverage at a concentration in the range 50 to 500 g/m$^3$, preferably in the range 150 to 400 g/m$^3$ with a commonly used contact time in the range 5 minutes to 24 hours, although there is no negative impact on the beverage if it is left in contact with the stabilising agent for an extended period of, for example, several days. The stabilising agent, together with the adsorbed polyphenols is then separated from the beverage by any suitable means, typically by filtration.

An alternative process for stabilising beverages according to the invention comprises treating the beverage with a stabilising agent comprising a particulate silica having a mean pore diameter of at least 6 nm and which has been modified by interaction with a water-soluble polymer having pendant pyrrolidone groups, the polymer being present on the silica in an amount from 5 to 35 per cent by weight with respect to anhydrous weight of silica, and with an unmodified silica gel. The unmodified silica gel can be a hydrogel or a xerogel. Preferably, in this alternative process the beverage is treated with a mixture of the modified silica and an unmodified hydrogel.

In general, any unmodified silica gel which is suitable for treating beverages can be used in this alternative process. Usually the modified silica and the unmodified silica gel are used as a combined stabilising agent in a weight ratio in the range 1 : 1 to 1 : 20 modified silica to unmodified silica gel. Preferably, the weight ratio is in the range 1 : 2 to 1 : 10 modified silica to unmodified silica gel.

This alternative process enables the removal of both polypeptides and polyphenols from a beverage in a one-step process which utilises the preferred, low-dusting hydrogel form of silica. Moreover, filtration of a beverage treated with this combined stabilising agent has been found to be rapid in comparison to a treatment with a single stabilising agent designed to remove polyphenols or with an alternative combined stabilising agent designed to remove polyphenols and polypetides.

The following standard tests were used to determine the values of the parameters which characterise the silica support and the stabilising agent used in the invention and also to test the performance of stabilising agents in beverages.

i) Surface Area and Pore Volume.

Surface area and pore volume of the silica support were measured using standard nitrogen adsorption methods of Brunauer, Emmett and Teller (BET) using a multi-point method with an ASAP 2400 apparatus supplied by Micromeritics of USA. The method is consistent with the paper by S. Brunauer, P.H. Emmett and E. Teller, J. Am. Chem. Soc., **60**, 309 (1938). Samples were outgassed under vacuum at 270° C for 1 hour before measurement at about -196° C.

ii) Total moisture content

The total moisture content was determined from the loss in weight of a sample of silica after heating in a furnace at 1000° C to constant weight.

iii) Weight Mean Particle Size

The weight mean particle size of the silicas used in the invention was determined using a Malvern Mastersizer Model X, made by Malvern Instruments, Malvem, Worcestershire with MS17 sample presentation unit. This instrument uses a development of Fraunhofer scattering theory to model the measured light scattered from a material in a laser beam (the Mie theory). A low power He/Ne laser is used to illuminate a sample cell containing a suspension of the particles in a liquid.

Before measurement, the particulates were dispersed ultrasonically in water for 5.5 minutes to form an aqueous suspension and then mechanically stirred before they were subjected to the measurement procedure outlined in the instruction manual for the instrument, utilising a lens with a focal length of 100 mm in the system.

iv) Beer Stabilisation

Samples of beer were treated with the relevant amount of stabiliser in a sealed container previously purged with carbon dioxide, using the appropriate contact time at 0° C. The treated beer was filtered at 0° C through a cellulose filter pad pre-coated with 0.7 kg/m$^2$ diatomaceous earth (Clarcel CBL) and aided with 1000 g/m$^3$ bodyfeed of the same diatomaceous earth. The filtrate was collected for tannoid analysis using a Tannometer.

Tannoids are defined as those fractions of polyphenolic compounds that can be precipitated by the addition of polyvinyl pyrrolidone, PVP K90, to the beer sample. They include the low and medium molecular weight polyphenols, the polymers of catechin and anthocyanogens. Measurement of the tannoid content of beer was carried out using a Tannometer, obtained from Pfeuffer GmbH, Kitzingen, Germany. On continuous injection of a solution of PVP into the sample a haze develops until all the tannoids are bound. The amount of PVP necessary to reach the maximum haze is proportional to the tannoid content of the sample. The Tannometer measures the amount of haze formed versus the amount of PVP injected and expresses the results in mg PVP per 1000 cm$^3$. In the examples described hereinafter, measurements were made on both the untreated control sample and the treated samples, and results expressed as percentage tannoid reduction by treatment with the stabilising agent.

v) Polymer content of stabilising agent

The amount of polymer associated with a silica after modification was calculated by measuring the carbon contents of the untreated and treated silicas using a Leco CS-244 Analyser. The amount of polymer on the silica was then calculated using:

$$\text{wt \% polymer on silica} = \frac{100 \times [(\text{wt \% C on treated silica}) - (\text{wt \% C on untreated silica})]}{(\text{wt \% C in polymer})}$$

The wt % C in the polymer was calculated from the structural formula of the polymer. For polyvinyl pyrrolidone this is 64.86%.

vi) Polymer Retention on silica

Polymer retention was measured in water at both room temperature and at 6° C. A 10%, by weight, suspension of the stabilising agent was prepared and agitated for a period of 16 hours, after which the slurry was filtered. Analysis of the filtrate was carried out by measuring the UV absorption at 215 nm, using cell with a 1 cm path length. Polymer concentration in solution was determined from a calibration graph.

The invention is illustrated by the following, non-limiting examples.

## EXAMPLES

## Example 1

10 g of a silica having a BET surface area to nitrogen of 400 $m^2g^{-1}$, a weight mean particle size, measured by Malvern Mastersizer® , of 10 μm and a pore volume to nitrogen of 1.0 $cm^3g^{-1}$ (calculated mean pore diameter 10 nm) was added to 100 $cm^3$ of water and to this was added 12.36 g (PVP K15 or PVP K30) or 10.30 g (PVP K90) of a polyvinyl pyrrolidone powder (PVP K15, K30 and K90 are different grades of polyvinyl pyrrolidone, differing in molecular weight) and the mixture was agitated for 24 hours at room temperature using a tilted tube roller mixer. The product was then isolated by filtration, washed with 500 $cm^3$ water and dried in a fan-assisted oven at 60° C and subsequently comminuted to 10 μm mean particle size. The amount of polymer present on the silica was calculated by carbon analysis.

A sample of a European all-malt lager beer was treated using the modified silica in the manner described under "Beer Stabilisation" hereinbefore. The percentage of tannoids removed was determined by the method given hereinbefore and the results are shown in Table 1 below, in which a comparison is made with a cross-linked polyvinyl pyrrolidone sold under the Trade Mark Polyclar 10 (obtained from International Specialty Products).

### TABLE 1

| Polymer type | Wt % Polymer on Silica | % Tannoid Reduction | | | |
|:---:|:---:|:---:|:---:|:---:|:---:|
| | | 200 g / m³ | 400 g / m³ | 600 g / m³ | 800 g / m³ |
| PVP K15* | 16.2 | 20.2 | 22.8 | 23.6 | 27.8 |
| PVP K30* | 16.2 | - | 22.5 | 25.4 | 33.0 |
| PVP K90* | 12.4 | - | 31.3 | 33.1 | 36.0 |
| PVPP (reference) | - | 34.7 | - | - | - |
| * Polyvinyl pyrrolidone obtained from Sigma-Aldrich | | | | | |

## Example 2

Example 1 was repeated using an alternative silica sample which had a BET surface area to nitrogen of 350 $m^2g^{-1}$, a weight mean particle size, measured by Malvern Mastersizer® , of 10 μm and a pore volume to nitrogen of 1.6 $cm^3g^{-1}$. The calculated mean pore diameter was about 18 nm. In each case 10 g of silica was treated with 12.36 g polymer. The effectiveness of the treated silica at removing tannoids was evaluated as described in Example 1 and the results are given in Table 2 below.

### TABLE 2

| Polymer type | Wt % Polymer on Silica | % Tannoid Reduction | | | |
|:---:|:---:|:---:|:---:|:---:|:---:|
| | | 200 g / m³ | 400 g / m³ | 600 g / m³ | 800 g / m³ |
| PVP K15 | 19.2 | 35.4 | 37.6 | 41.5 | 43.7 |
| PVP K30 | 17.3 | - | 35.3 | 33.2 | 36.1 |
| PVP K90 | 14.8 | 32.1 | 32.5 | - | - |
| PVPP (reference) | - | 35.8 | - | - | - |

## Example 3

Example 1 was repeated using an alternative silica sample which had a BET surface area to nitrogen of 690 $m^2g^{-1}$, a weight mean particle size, measured by Malvern Mastersizer® , of 15 μm and a pore volume to nitrogen of 1.7 $cm^3g^{-1}$. The calculated mean pore diameter was approximately 10 nm. In each case 10 g of silica was treated with 12.36 g polymer. The treated silica was tested for tannoid removal in a second European all-malt lager and the results are given in Table 3 below.

**TABLE 3**

| Polymer type | Wt % Polymer on Silica | % Tannoid Reduction | | | |
|---|---|---|---|---|---|
| | | 200 g / m$^3$ | 400 g / m$^3$ | 600 g / m$^3$ | 800 g / m$^3$ |
| **PVP K15** | 19.0 | - | 25.6 | 25.6 | 31.6 |
| **PVP K30** | 21.2 | 24.3 | 22.0 | 29.4 | 28.9 |
| **PVP K90** | 22.9 | 21.7 | 25.8 | 27.1 | - |
| **PVPP (reference)** | - | 22.6 | - | - | - |

### Example 4

A dispersion of 3.2 kg of a silica having a BET surface area to nitrogen of 690 m$^2$g$^{-1}$, a mean particle size, measured by Malvern Mastersizer® , of 15 $\mu$m and a pore volume to nitrogen of 1.7 cm$^3$g$^{-1}$ (calculated mean pore diameter approximately 10 nm) in 0.04 m$^3$ of water was prepared and to this was added 1.2 kg of PVP K90 polyvinyl pyrrolidone in the form of a 5% solution in water and the mixture was agitated for 2 hours at room temperature. The product was then isolated by filtration, washed with water and dried in a fan-assisted oven at 60° C and then comminuted to a mean particle size of 15 $\mu$m. The amount of polymer present on the silica was calculated by carbon analysis and found to be 16.4% by weight.

The product was assessed for polymer retention using the test method described hereinbefore. Commercial products used to stabilise beers were compared for "polymer retention". These products were: two samples of cross-linked polyvinyl pyrrolidone (Polyclar 10 and a product obtained from Fisher Fine Chemicals, UK) and Polyclar Plus 730, a mixture of silica xerogel and Polyclar 10 available from International Specialty Products. The results are given in Table 4 below.

**TABLE 4**

| Product | Soluble PVP extracted (ppm) | |
|---|---|---|
| | Treatment at Room Temperature | Treatment at 6° C |
| Example 4 | 69.8 | 81.6 |
| Polyclar 10 | 1368.3 | 1249 |
| Cross-linked polyvinyl pyrrolidone ex. Fisher. | 941.3 | - |
| Polyclar Plus 730 | 148.7 | - |

The results in Table 4 show that much less PVP polymer is extracted using this test from the product of Example 4, than from the cross-linked polyvinyl pyrrolidone and the blended silica plus Polyclar 10 product, Polyclar Plus 730.

### Claims

1.    A process for stabilising a beverage against haze formation comprising treating the beverage with a stabilising agent comprising a particulate silica having a mean pore diameter of at least 6 nm and which has been modified by interaction of silica particles with a water-soluble polymer having pendant pyrrolidone groups, the polymer being present on the silica in an amount from 5 to 35 per cent by weight with respect to anhydrous weight of silica.

2.    A process according to claim 1 **characterised in that** the beverage is a lager beer.

3.    A process according to claim 1 or 2 **characterised in that** the silica has a surface area to nitrogen in the range 200 to 1000 m$^2$g$^{-1}$.

4.    A process according to any one of the preceding claims **characterised in that** the silica has a pore volume to nitrogen in the range 0.5 to 2.5 cm$^3$g$^{-1}$.

5.    A process according to any one of the preceding claims **characterised in that** the silica has a weight mean particle size in the range 2 to 100 micrometers.

6.  A process according to any one of the preceding claims **characterised in that** the silica has a total moisture content in the range 2 to 70 per cent by weight.

7.  A process according to any one of the preceding claims **characterised in that** the water-soluble polymer is a copolymer or homopolymer of vinyl pyrrolidone.

8.  A process according to claim 7 **characterised in that** the polymer is polyvinyl pyrrolidone having a weight average molecular weight in the range 8000 to 1,300,000.

9.  A process according to any one of the preceding claims **characterised in that** the amount of water-soluble polymer present on the silica is in the range 10 to 30 per cent by weight based on weight of anhydrous silica.

10. A process according to any one of the preceding claims **characterised in that** the stabilising agent is mixed with the beverage at a dose level in the range 50 to 500 g/m$^3$.

11. A process according to claim 10 **characterised in that** the beverage is contacted with the stabilising agent for a period in the range 5 minutes to 24 hours.

12. A process according to any one of the preceding claims **characterised in that** the beverage is treated with a stabilising agent as used in claim 1 and with an unmodified silica hydrogel.

13. A process according to claim 12 **characterised in that** the stabilising agent and silica hydrogel are used in a weight ratio in the range 1 : 1 to 1 : 30 stabilising agent to unmodified silica hydrogel.

## Patentansprüche

1.  Verfahren zum Stabilisieren eines Getränks gegen Trübungsbildung, umfassend eine Behandlung des Getränks mit einem Stabilisierungsmittel, das aus Partikeln bestehendes Siliciumdioxid mit einem mittleren Porendurchmesser von zumindest 6 nm enthält und das durch Wechselwirkung von Siliciumdioxidpartikeln mit einem wasserlöslichen Polymer mit anhängenden Pyrrolidon-Gruppen modifiziert wurde, wobei das Polymer auf dem Siliciumdioxid in einer Menge von 5 bis 35 Gewichtsprozent, bezogen auf das wasserfreie Gewicht des Siliciumdioxids, vorhanden ist.

2.  Verfahren nach Anspruch 1, **dadurch gekennzeichnet, dass** das Getränk ein Lagerbier ist.

3.  Verfahren nach Anspruch 1 oder 2, **dadurch gekennzeichnet, dass** das Siliciumdioxid eine spezifische Oberfläche für Stickstoff im Bereich von 200 bis 1000 m$^2$g$^{-1}$ hat.

4.  Verfahren nach einem der vorhergehenden Ansprüche, **dadurch gekennzeichnet, dass** das Siliciumdioxid ein Porenvolumen für Stickstoff im Bereich von 0,5 bis 2,5 cm$^3$g$^{-1}$ hat.

5.  Verfahren nach einem der vorhergehenden Ansprüche, **dadurch gekennzeichnet, dass** das Siliciumdioxid eine gewichtete mittlere Partikelgröße im Bereich von 2 bis 100 Mikrometern hat.

6.  Verfahren nach einem der vorhergehenden Ansprüche, **dadurch gekennzeichnet, dass** das Polymer einen Gesamtfeuchtigkeitsgehalt im Bereich von 2 bis 70 Gewichtsprozent hat.

7.  Verfahren nach einem der vorhergehenden Ansprüche, **dadurch gekennzeichnet, dass** das wasserlösliche Polymer ein Copolymer oder Homopolymer von Vinylpyrrolidon ist.

8.  Verfahren nach Anspruch 7, **dadurch gekennzeichnet, dass** das Polymer Polyvinylpyrrolidon mit einem gewichteten durchschnittlichen Molekulargewicht im Bereich von 8000 bis 1300000 ist.

9.  Verfahren nach einem der vorhergehenden Ansprüche, **dadurch gekennzeichnet, dass** die Menge des auf dem Siliciumdioxid vorhandenen wasserlöslichen Polymers im Bereich von 10 bis 30 Gewichtsprozent, bezogen auf das Gewicht von wasserfreiem Siliciumdioxid, liegt.

**EP 1 354 027 B1**

10. Verfahren nach einem der vorhergehenden Ansprüche, **dadurch gekennzeichnet, dass** das Stabilisierungsmittel mit dem Getränk bei einem Dosierungspegel im Bereich von 50 bis 500 g/m$^3$ gemischt wird.

11. Verfahren nach Anspruch 10, **dadurch gekennzeichnet, dass** das Getränk während einer Periode im Bereich von 5 Minuten bis 24 Stunden mit dem Stabilisierungsmittel in Kontakt gebracht wird.

12. Verfahren nach einem der vorhergehenden Ansprüche, **dadurch gekennzeichnet, dass** das Getränk mit einem Stabilisierungsmittel wie in Anspruch 1 verwendet und mit einem unmodifizierten Siliciumdioxid-Hydrogel behandelt wird.

13. Verfahren nach Anspruch 12, **dadurch gekennzeichnet, dass** das Stabilisierungsmittel und das Siliciumdioxid-Hydrogel in einem Gewichtsverhältnis im Bereich von 1:1 bis 1:30 von Stabilisierungsmittel zu unmodifiziertem Siliciumdioxid-Hydrogel verwendet werden.

**Revendications**

1. Procédé pour la stabilisation d'une boisson contre la formation de voile comprenant le traitement de la boisson avec un agent stabilisant comprenant une silice particulaire ayant un diamètre moyen de pores d'au moins 6 nm et laquelle a été modifiée par interaction de particules de silice avec un polymère soluble dans l'eau présentant des groupes pyrrolidone suspendus, le polymère étant présent sur la silice dans une quantité de 5 à 35 % en poids par rapport au poids anhydre de la silice.

2. Procédé selon la revendication 1, **caractérisé en ce que** la boisson est une bière de garde.

3. Procédé selon la revendication 1 ou 2, **caractérisé en ce que** la silice présente une surface spécifique par rapport à l'azote dans l'intervalle de 200 à 1 000 m$^2$ g$^{-1}$.

4. Procédé selon l'une quelconque des revendications précédentes, **caractérisé en ce que** la silice présente un volume de pores par rapport à l'azote dans l'intervalle de 0,5 à 2,5 cm$^3$ g$^{-1}$.

5. Procédé selon l'une quelconque des revendications précédentes, **caractérisé en ce que** la silice présente une taille moyenne de particules pondérée dans l'intervalle de 2 à 100 $\mu$m.

6. Procédé selon l'une quelconque des revendications précédentes, **caractérisé en ce que** la silice présente une teneur totale en humidité dans l'intervalle de 2 à 70 % en poids.

7. Procédé selon l'une quelconque des revendications précédentes, **caractérisé en ce que** le polymère soluble dans l'eau est un copolymère ou un homopolymère de vinylpyrrolidone.

8. Procédé selon la revendication 7, **caractérisé en ce que** le polymère est la polyvinylpyrrolidone ayant un poids moléculaire moyen en poids dans l'intervalle de 8 000 à 1 300 000.

9. Procédé selon l'une quelconque des revendications précédentes, **caractérisé en ce que** la quantité de polymère soluble dans l'eau présent sur la silice se trouve dans l'intervalle de 10 à 30 % en poids rapporté au poids de silice anhydre.

10. Procédé selon l'une quelconque des revendications précédentes, **caractérisé en ce que** l'agent stabilisant est mélangé avec la boisson à un niveau de dosage dans l'intervalle de 50 à 500 g/m$^3$.

11. Procédé selon la revendication 10, **caractérisé en ce que** la boisson est mise en contact avec l'agent stabilisant sur une durée dans l'intervalle de 5 minutes à 24 heures.

12. Procédé selon l'une quelconque des revendications précédentes, **caractérisé en ce que** la boisson est traitée avec un agent stabilisant selon la revendication 1 et avec un hydrogel de silice non modifié.

13. Procédé selon la revendication 12, **caractérisé en ce que** l'agent stabilisant et l'hydrogel de silice sont utilisés dans un rapport massique dans l'intervalle de 1:1 à 1:30 d'agent stabilisant à l'hydrogel de silice non modifié.

8